# EUROPÄISCHE PATENTSCHRIFT

(11) **EP 2 817 859 B1**
(45) Veröffentlichungstag und Bekanntmachung des Hinweises auf die Patenterteilung: **14.06.2017**
(21) Anmeldenummer: 13705450.8
(22) Anmeldetag: 19.02.2013
(51) Int. Cl.: H02H 1/06, H02H 1/00

(54) **ANORDNUNG ZUM ANLAGEN- UND PERSONENSCHUTZ**
ARRANGEMENT FOR PROTECTING SYSTEMS AND INDIVIDUALS
ENSEMBLE DE PROTECTION D'INSTALLATIONS ET DE PERSONNES

(30) Priorität: 20.02.2012 DE 202012001729 U; 20.03.2012 DE 102012005704; 30.01.2013 DE 102013001612
(43) Veröffentlichungstag der Anmeldung: 31.12.2014
(73) Patentinhaber: Dehn + Söhne GmbH + Co. KG, 92318 Neumarkt/Opf. (DE)
(72) Erfinder: EHRHARDT, Arnd, 92318 Neumarkt (DE); BURGER, Christian, 93155 Hemau (DE)
(74) Vertreter: Kruspig, Volkmar
(86) Internationale Anmeldenummer: PCT/EP2013/053220
(87) Internationale Veröffentlichungsnummer: WO 2013/124248

(56) Entgegenhaltungen:
- EP-A2- 1 335 466
- DD-A1- 215 431
- DE-A1- 19 952 507
- DE-B4-102005 048 003
- US-A- 5 933 308
- US-A1- 2009 213 509

## Beschreibung

Die Erfindung betrifft eine Anordnung zum Anlagen- und Personenschutz, umfassend ein Schaltelement, welches von einer Störlichtbogenerkennung auslösbar ist, gemäß Anspruch 1.

Systeme zum Kurzschließen von Niederspannungsanlagen zur Reduzierung der Schäden infolge von Störlichtbögen gehören zum Stand der Technik. Vordergründig sind bei derartigen Systemen der Anlagenschutz, die Anlagenverfügbarkeit sowie kurze Zeiten zur Wiederinbetriebnahme. Vorbekannte Systeme sind im Regelfall fest in der Anlage installiert.

Neben dem Anlagenschutz übernehmen bekannte Systeme auch Funktionen bezüglich des Personenschutzes im Normalbetrieb. Die Funktion der Systeme ist üblicherweise direkt oder indirekt an die Netzspannung der Anlagen gekoppelt. Die Zeit bis zur Betriebsbereitschaft der Systeme ist teilweise recht hoch.

Ebenfalls sind mobile Systeme bekannt, welche insbesondere auf die Belange des Personenschutzes beim Arbeiten unter Spannung ausgerichtet sind. Derartige Systeme arbeiten üblicherweise autark. Diesbezüglich zeigt die DE 10 2008 038 248 A1 eine Störlichtbogen-Schutzeinrichtung für elektrische Energieverteilungsanlagen, umfassend mindestens einen Kurzschließer, eine Ansteuerung und einen Sensor zur Störlichtbogenerfassung. Kurzschließer, Ansteuerung und Störlichtbogen-Erfassungssensor sind nicht stationär, sondern transportabel ausgeführt. Die vorerwähnten Mittel werden vor Ort an die unter Spannung stehende Anlage angeschlossen und nach Beendigung der Arbeiten entfernt. Bevorzugt weist die vorbekannte Störlichtbogen-Schutzeinrichtung eine separate Stromversorgung auf, so dass eine Unabhängigkeit vom jeweiligen Energieversorgungsnetz bzw. der jeweiligen Energieversorgungsanlage gegeben ist.

Bekannte Kurzschließereinrichtungen werden in vielen Fällen von Lichtbogen-Detektionssystemen angesteuert, welche meist parallel geschaltete Geräte zur Anlagentrennung ansteuern. Die Kurzschließereinrichtung dient dem raschen Verlöschen des Lichtbogens, da übliche Schalter Verzugszeiten von mehreren 10 bis 100 ms besitzen. Ein wirksamer Anlagenschutz ist üblicherweise nur bei hohen Kurzschlussströmen mit einem Störlichtbogenschutzsystem, bestehend nur aus Detektionssystem mit Ansteuerung der Leistungsschalter ohne zusätzliche Kurzschließereinrichtung nicht möglich.

Bekannt sind darüber hinaus Störlichtbogen-Detektionssysteme zur Ansteuerung von Leistungsschaltern. Durch die Ergänzung mit einem Kurzschließer können viele derartige Systeme auch Anlagen mit hohen Kurzschlussströmen wirkungsvoll schützen.

Die Ergänzung einer Detektionseinrichtung innerhalb bestehender Niederspannungsanlagen ist dann wesentlich, wenn die Kurzschlussleistung der Anlage, z.B. durch Verschaltung im Ringbetrieb erhöht oder die Anlage erweitert wird bzw. eine verbesserte Anlagenverfügbarkeit notwendig ist.

Bei der Inbetriebnahme von Anlagen mit fest installierten Systemen und auch bei der Wartung kann es zu einem ungenügenden Schutz der Anlage bzw. von Personen kommen.

Bei einer Erst- oder Wiederinbetriebnahme einer Anlage kann beispielsweise durch vergessenes Werkzeug, geschädigte oder gebrückte Isolatoren unmittelbar bei der Zuschaltung ein Kurzschluss eintreten, ohne dass eine Netzspannung aufgebaut wird. Die Spannung an den Phasen entspricht in diesem Fall nur dem Spannungsabfall bei Kurzschlussstrom bzw. der Störlichtbogenspannung nach Überlastung der Kurzschlussbrücke. Gerade in diesen Situationen sind Personen durch den Störlichtbogen direkt gefährdet.

Bei einigen bekannten Detektionssystemen können zudem ohne Passivierung der Auslösefunktion die Anlagen nicht gewartet oder auch zum Zweck einer optischen Sichtung nicht geöffnet werden, da dies unter Umständen zu einer Fehldetektion führt.

Die Installation einer zusätzlichen mobilen Schutzeinrichtung und insbesondere einer Kurzschließereinrichtung zum Schutz der arbeitenden Personen entsprechend DE 10 2008 038 248 A1 wird daher oft nicht vorgenommen bzw. als nicht gerechtfertigt betrachtet.

Zum Stand der Technik gehören weiterhin Kurzschließereinrichtungen für den Einsatz in Nieder- und Mittelspannungsanlagen zum Sach- und Personenschutz, umfassend ein Schaltelement, welches vom Auslösesignal einer Fehlererfassungseinrichtung betätigbar ist.

Eine derartige Kurzschließereinrichtung nach DE 10 2005 048 003 B4 weist zwei sich gegenüberliegende Kontaktelektroden mit Mitteln zur Stromzuführung auf, wobei diese Elektroden an einen Stromkreis mit Anschlüssen von unterschiedlichem Potential kontaktierbar sind. Weiterhin stehen die Kontaktelektroden unter mechanischer Vorspannung und können im Kurzschlussfall federkraftunterstützt eine Relativbewegung zueinander ausführen.

Die Lösung nach DE 10 2005 048 003 B4 umfasst auch ein Opferelement als Abstandshalter zwischen den Kontaktelektroden sowie eine elektrische Verbindung zwischen dem Opferelement und dem Schaltelement einerseits und einer der Kontaktelektroden andererseits, um eine stromflussbedingte thermische Zerstörung des Opferelements gezielt herbeizuführen. Gemäß einer Ausführungsform kann das Opferelement ein dünnwandiger Hohlzylinder mit einem Verhältnis zwischen Durchmesser und Wandstärke des Hohlzylinders größer 10:1, bestehend aus einem hochschmelzenden metallischen Material, sein.

Bei der passiven oder aktiven Kurzschließeinrichtung für den Einsatz in Nieder- und Mittelspannungsanlagen zum Sach- und Personenschutz nach DE 20 2006 020 737 U1 sind ebenfalls zwei sich gegenüberliegende Kontaktelektroden mit Mitteln zur Stromzuführung vorhanden, wobei diese an einen Stromkreis mit Anschlüssen von unterschiedlichem Potential kontaktierbar sind. Weiterhin stehen die Kontaktelektroden unter mechanischer Vorspannung und können im Kurzschlussfall federkraftunterstützt eine Relativbewegung zueinander ausführen.

Bei einer Ausführungsform zur Betätigung mit Hilfsenergie ist ein beidseitig isoliert ausgeführtes Opferelement vorhanden, welches durch Hilfsenergie, z.B. aus einer Notversorgung, unabhängig von den Bedingungen an den Hauptkontakten in den Kurzschluss versetzt werden kann.

Zusammenfassend ist die Realisierung eines elektrischen Kurzschlusses in Niederspannungsanlagen zur Reduzierung der Auswirkungen eines Störlichtbogens zum Anlagen- und Personenschutz Stand der Technik. Es sind sowohl fest installierte als auch mobile Kurzschließeinrichtungen bekannt. Diese Kurzschließeinrichtungen bestehen im Allgemeinen aus einer Lichtbogen-Detektionseinheit und dem eigentlichen Kurzschließer. Üblicherweise benötigen die vorgenannten Einheiten eine gemeinsame oder eine separate Spannungsversorgung. Bei einem Störlichtbogen in der Anlage bricht die Netzspannung auf den im Allgemeinen niedrigen Wert der Lichtbogenspannung zusammen. Daher wird die Versorgungsspannung für die vorstehend erwähnten Einheiten durch unterbrechungsfreie Stromversorgungen, separate Hilfsspannungen, Pufferspeicher, Batterien oder einen Netzspannungsabgriff, welcher vor dem vorgeordneten Betriebsschalter der Anlage erfolgt, gewährleistet. Neben diesem erhöhten Aufwand zur Realisierung einer Spannungsversorgung ergeben sich auch Einschränkungen der Funktionssicherheit.

Der Speicher- und Pufferbetrieb führt zwangsweise zu Verzugszeiten bezüglich der Einsatzbereitschaft. Die Detektionseinrichtungen besitzen zudem häufig eine Routine zur Eigenüberprüfung, welche insbesondere bei komplexen Anlagen mehrere Sekunden bis Minuten in Anspruch nehmen kann.

US 5 933 308 A lehrt eine klassische Störlichtbogendetektion, wobei nach Detektion ein Thyristorschalter zum Kurzschließen des betroffenen Stromkreises angesteuert wird.

EP 1 335 466 A2 beschreibt eine Detektionseinrichtung zur Störlichtbogenerfassung.

Aus DD 215 431 A1 ist festzuhalten dass es um die Frage der Unterscheidung zwischen Störlichtbogen und Fremdlichteinfall geht, um die Betriebssicherheit einer Störlichtbogenüberwachungseinrichtung zu verbessern.

Der Betrieb von bekannten Detektionseinrichtungen beruht zudem ausschließlich auf der Auswertung der Lichtemission, wodurch beim Öffnen der Anlagen bzw. bei einer Wartung zusätzliche Vorsichtsmaßnahmen bzw. sogar eine Außerbetriebnahme der Schutzeinrichtung erforderlich ist.

Aus dem Vorgenannten ist es daher Aufgabe der Erfindung, eine weiterentwickelte Anordnung zum Anlagen- und Personenschutz anzugeben, welche die notwendige Sicherheit bereits bei der ersten Inbetriebnahme und bei Wartungstätigkeiten insbesondere bei Arbeiten unter Spannung gewährleistet, und zwar ohne dass Batterien, Pufferspeicher oder unterbrechungsfreie externe Stromversorgungen zum Einsatz kommen müssen.

Es ist also Aufgabe der Erfindung, eine Anordnung zu schaffen, die ohne zusätzliche Hilfsenergie funktionsfähig und in der Lage ist, bei der Entstehung eines Störlichtbogens z.B. aus der Überlastung einer beim Arbeiten unter Spannung aufgebrachten Drahtbrücke rechtzeitig zu reagieren.

Weiterhin soll die Anordnung auch an beliebige bekannte Detektionssysteme nachträglich anpassbar sein und einen Parallelbetrieb verschiedener Detektionseinrichtungen erlauben. Weiterhin soll die gegebenenfalls vorgesehene Kurzschließereinrichtung insbesondere für Arbeiten unter Spannung mit einer zusätzlichen mobilen und autarken Detektionseinheit alternativ oder nur vorübergehend ansteuerbar sein, wobei durch und während der Anbringung die Schutzfunktion der Kurzschließereinrichtung stets erhalten bleibt.

Die Lösung der Aufgabe der Erfindung erfolgt durch die Merkmalskombination nach Anspruch 1, wobei die Unteransprüche mindestens zweckmäßige Ausgestaltungen und Weiterbildungen beinhalten.

Die erfindungsgemäße Anordnung benötigt keine zusätzliche Energieversorgung. Die zur Auslösung des Schaltelements benötigte Energie wird aus einer Stromquelle gewonnen, welche aus der Spannung des Störlichtbogens selbst versorgt wird.

Diese elektronische Stromquelle wird hierbei bevorzugt über einen Bipolartransistor mit isoliertem Gate (IGBT) geregelt.

Die vorhandene oder auszubildende Kurzschließereinrichtung einschließlich der elektronischen Stromquelle genügt dabei den Anforderungen für den Einsatz in Energieversorgungsanlagen der Niederspannung.

Die Funktion der Kurzschließereinrichtung ist bei Lichtbogenspannungen ab 30V mit einer Verzugszeit von wenigen µs nach Signalabgabe durch die Detektionseinrichtung gewährleistet. Die Kurzschließereinrichtung besitzt eine Ansteuerung, welche unabhängig von der Art der jeweils vorhandenen Lichtbogen-Detektionseinheit betätigbar ist.

Bei der Inbetriebnahme bzw. bei Wartungsarbeiten an Anlagen kann die Kurzschließereinrichtung parallel oder ausschließlich von einem zusätzlichen, z.B. mobilen Detektionssystem, welches beispielsweise bei starker Fremdbeleuchtung oder auch unabhängig vom Kurzschlussstrom Störlichtbögen detektieren kann, aktiviert werden.

Die Kurzschließereinrichtung kann dabei auch in der Anlage bereits fest installiert sein bzw. zusätzlich eingebracht werden.

Die Kurzschließer können hier z.B. entsprechend den Lösungen nach DE 103 13 045 B3, DE 10 2005 048 003 B4, DE 10 2008 038 248 A1 oder DE 20 2006 020 737 U1 aufgebaut sein oder realisiert werden.

Die Kurzschließereinrichtung besitzt ausführungsgemäß einen oder mehrere optische Eingänge zur Ansteuerung durch ein oder mehrere Detektionssysteme.

Zur Nutzung von unterschiedlichen Detektionssystemen, welche beispielsweise keinen optischen Signalausgang aufweisen, kann ein Adapter vorgesehen sein, welcher übliche Signalausgänge der Detektionseinrichtungen in ein optisches Signal wandelt.

Derartige Ausgänge sind beispielsweise potentialfreie Schließer oder z.B. Kapazitäten, welche unter Nutzung der Energie entladen werden können.

Die Anbindung einer weiteren, z.B. mobilen Detektionseinrichtung kann ebenfalls an den Adapter oder bei optischer Signalabgabe auch direkt an der Kurzschließereinrichtung erfolgen. Die Anbringung kann hierbei ohne Unterbrechung der Funktionssicherheit realisiert werden.

Für eine Fernauslösung kann der Adapter oder auch die elektronische Stromquelle der Kurzschließereinrichtung über ein Funksignal oder aber auch mittels einem auf den Phasen der Niederspannungsanlage modulierten Signal direkt angesteuert werden.

Durch die Nutzung der vorgeschlagenen Lösung kann daher bei einer Inbetriebnahme oder bei Wartungsarbeiten die Funktion des Kurzschließers der Anlage zu jedem Zeitpunkt einer Störlichtbogen-Gefährdung gewährleistet werden.

Offenbarungsseitig wird also von einer Anordnung zum Anlagen- und Personenschutz im Niederspannungsbereich, z.B. durch Erzeugen eines Kurzschlusses mittels einer Kurzschließereinrichtung, mit einem Schaltelement, welches von einer Störlichtbogenerkennung auslösbar ist, ausgegangen. Die Kurzschließereinrichtung kann zwei relativ zueinander bewegliche Kontakte umfassen, welche durch ein Opferelement auf Distanz gehalten sind, wobei weiterhin mit Hilfe des Schaltelements das Opferelement derart beeinflussbar ist, dass die zueinander beweglichen Kontakte in einen Kurzschlusszustand übergehen.

Erfindungsgemäß resultiert die elektrische Energie zum Auslösen des Schaltelements ausschließlich aus der Energie des auftretenden Störlichtbogens.

Weiterhin ist erfindungsgemäß eine elektronische Auslösebaugruppe vorgesehen, welche einen Bipolartransistor mit isolierter Gate-Elektrode enthält, dessen Kollektor und Emitter zwischen zwei Phasen L1 und L2 geschaltet sind und welcher mit einem Schalttransistor in Verbindung steht, welcher bei Auftreten eines Störlichtbogens leitfähig wird und über seinen Ausgang das Schaltelement betätigt. Dabei wirkt der Bipolartransistor mit isolierter Gate-Elektrode in Verbindung mit dem Schalttransistor sowie der Störlichtbogenspannung als quasi interne Stromquelle.

Weiterhin kann, wie bereits vorerwähnt, ein Adapter vorgesehen sein, welcher Signale bekannter Lichtbogendetektoren in ein optisches Signal umwandelt und dieses über eine Lichtwellenleiter-Verbindung der elektronischen Auslösebaugruppe zuleitet.

Das Schaltelement kann als Thyristor ausgebildet werden.

Die elektronische Auslösebaugruppe wird durch eine UND-Verknüpfung eines optischen Signals und der Störlichtbogenspannung aktiviert, so dass dann das Schaltelement betätigbar ist.

Die elektronische Auslösebaugruppe weist hierfür eine Fotodiode, einen Fototransistor, einen Fotowiderstand oder dergleichen Mittel auf, mit dessen Hilfe der Schalttransistor in einen leitenden Zustand versetzbar ist.

Erfindungsgemäß besteht auch die Möglichkeit, direkt optisch ansteuerbare Thyristoren als Schaltelemente einzusetzen.

Die erfindungsgemäße Anordnung ist unter Spannung installierbar, so dass eine Anlagenunterbrechung nicht notwendig wird.

Die erfindungsgemäß eingesetzte Kurzschließeinrichtung wird beispielsweise gemäß der DE 103 13 045 B3 oder der DE 10 2005 048 003 B4 realisiert.

Die Energie zur Ansteuerung der Schaltelemente, die wie erwähnt z.B. als Thyristoren ausführbar sind, wird erfindungsgemäß durch eine Stromquelle aus der Spannung des Störlichtbogens gewonnen, wobei die Stromquelle durch den IGBT gesteuert wird.

Die Stromquelle wird durch die erwähnte UND-Verknüpfung von Lichtsignalen und Störlichtbogenspannung größer 20V niederohmig geschaltet, wodurch die Ansteuerung der Thyristoren und somit der Kurzschließereinrichtung erfolgt.

Im hochohmigen Zustand ist die Verlustleistung der Ansteuerelektronik vernachlässigbar und die Schaltung genügt den Anforderungen für den dauerhaften Einsatz im transformatornahen Einspeisebereich von Niederspannungsnetzen.

Die Ansteuerung mit Licht bietet den Vorteil, dass ein Wechsel der Überspannungsschutzkategorie zwischen den fest installierten Lichtbogen-Detektionseinrichtungen und der Kurzschließereinrichtung selbst bei größeren Distanzen problemlos möglich ist.

Besitzt die Detektionseinrichtung keinen unmittelbar optischen Signalausgang, kann der erwähnte Adapter eingesetzt werden, welcher unterschiedlichste Signalausgänge von Detektionseinrichtungen nahezu verzugslos in ein entsprechendes Lichtsignal umwandelt.

Als Signal hierzu sind diejenigen üblicher potentialfreier Schließer, potentialbehaftete Schließer, Kapazitätsentladung und die Beschaltung mit üblichen Versorgungsspannungen, welche zur Ansteuerung von Unterspannungsauslösern von Leistungsschaltern verwendet werden, geeignet.

Der Adapter besitzt hierfür mehrere spezifizierte Eingänge, welche wahlweise alternativ oder auch parallel zur Signalerzeugung genutzt werden können. Der Adapter kann bei einer Ausführungsform der Erfindung einen Empfänger zur Funkauslösung bzw. bei entsprechendem Anschluss auch von leitungsgebundenen Signalgrößen zur Fernauslösung besitzen.

Die Möglichkeit der Fernauslösung kann alternativ, aber auch unmittelbar an der Kurzschließereinrichtung realisiert werden. Der Adapter und die Kurzschließereinrichtung können beide einen Eingang zur Ansteuerung durch ein separates, z.B. mobiles Lichtbogen-Detektionssystem aufweisen, welches den parallelen bzw. auch den alternativen Betrieb der Kurzschließereinrichtung ermöglicht.

Die Kurzschließereinrichtung kann bereits bei der Inbetriebnahme installiert werden und fest mit der Anlage verbunden sein bzw. aber auch bei Wartungsarbeiten unter Spannung installiert werden. Hierfür wird insbesondere auf eine Ausführungsform gemäß DE 20 2006 020 737 U1 verwiesen.

Damit kann die Kurzschließereinrichtung zur Ergänzung von Anlagen mit beliebigen Detektionseinrichtungen genutzt werden, welche bisher nur zur Ansteuerung von Schaltgeräten dienten, wodurch der Schutzumfang bei Störlichtbögen erheblich erweitert ist. Die Kurzschließereinrichtung kann zusätzlich auch zum Personenschutz bei Arbeiten unter Spannung auch bei ungeeigneter fest installierter Detektionseinrichtung durch den zeitweiligen Einsatz einer z.B. mobilen Detektionseinheit Anwendung finden.

Die vorgestellte Lehre besteht zusammenfassend aus einem an sich bekannten Kurzschließer nebst Adapter zur Ansteuerung sowie der Signalabgabe über eine Lichtwellenleiter-Verbindung. Dabei zeichnet sich die Kurzschließereinrichtung dadurch aus, dass keine Zusatzenergie benötigt wird und die Montage bei Bedarf auch unter Spannung erfolgen kann.

Durch die Lichtwellenleiter-Verbindung zwischen Adapter und Kurzschließer besteht eine galvanische Trennung, wodurch die Geräte in Bereiche mit verschiedenen Überspannungsschutzkategorien und in nahezu beliebigen Distanzen angeordnet sein können.

Vorstehendes ermöglicht eine flexible Installation und eine geringe Fehlauslösewahrscheinlichkeit aufgrund der EMV-freundlichen Installation. Durch die separate Anschlussmöglichkeit einer mobilen Detektionseinrichtung ergibt sich ein besserer Schutz bei Wartungsarbeiten unter Spannung und bei Inbetriebnahmen unabhängig von der Auslegung einer vorhandenen festen Detektionseinheit.

Der vorgestellte Adapter ermöglicht die Kopplung der Kurzschließereinrichtung mit allen bekannten Störlichtbogen-Detektionseinrichtungen, wodurch in einfacher Art und Weise vorhandene Störlichtbogen-Schutzeinrichtungen ohne Kurzschließer mit einer solchen ergänzt werden können, wodurch die Effizienz beim Schutz von Einrichtungen und Anlagen deutlich gesteigert werden kann. Die Installation des Adapters ist aufgrund der Lichtwellenleiter-Signalgabe und der nicht benötigten Anbindung an eine Versorgungsspannung einfach möglich.

Die Erfindung soll nachstehend anhand eines Ausführungsbeispiels sowie unter Zuhilfenahme von Figuren näher erläutert werden.

Hierbei zeigen:
- Fig. 1: eine beispielhafte Anlagenausführung mit Kurzschließer, Adapter und mobilem Detektor;
- Fig. 2: einen beispielhaften Aufbau eines Kurzschließers bzw. einer Kurzschließereinrichtung als Prinzip-Schnittdarstellung mit Schaltvorrichtung und elektronischer Auslösebaugruppe sowie
- Fig. 3: ein Schaltbild der elektronischen Auslösebaugruppe zum Aktivieren des als Thyristor ausgebildeten Schaltelements.

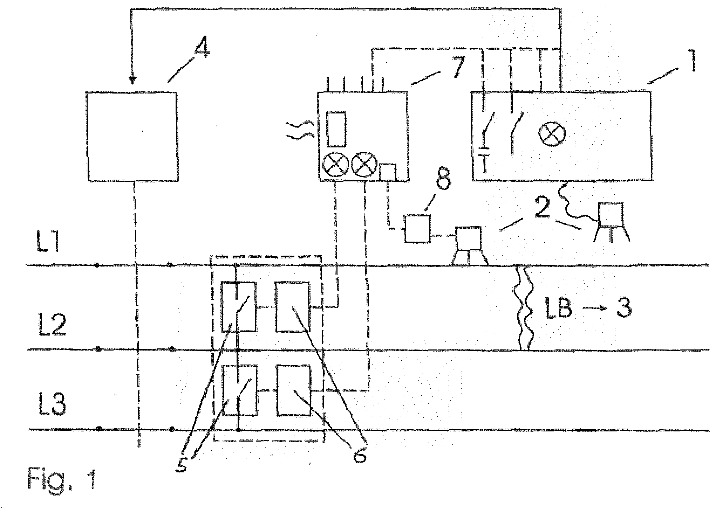

Die Lichtbogen-Detektionseinrichtung 1 nach Fig. 1 mit einem optischen Detektor 2 erfasst den symbolisch mit 3 bezeichneten Lichtbogen LB.

Die Lichtbogen-Detektionseinrichtung 1 aktiviert einen vorgeordneten Leistungsschalter 4, welcher nach einer Betätigungszeit von mehreren 10 bis 100 ms die vom Störlichtbogen betroffene Anlage von der Netzspannung abtrennt.

Zusätzlich kann von der Lichtbogen-Detektionseinrichtung 1 ein Kurzschließer zur Verkürzung der Störlichtbogenzeit aktiviert werden.

Die Nachrüstung eines Kurzschließers an vorhandene Detektionssysteme ist jedoch bisher nur bedingt möglich, da die Signalgabe, die Detektionseinrichtung und der Kurzschließer aufeinander abgestimmt sein müssen.

Bisher können daher nur Kurzschließer an Detektionseinrichtungen nachgerüstet werden, welche prinzipiell bereits für diese Funktion vorgesehen sind, wozu jedoch die Anlage außer Betrieb gesetzt werden muss.

Die Installation einer Kurzschließereinrichtung 5 kann gemäß Ausführungsbeispiel auch nachträglich unter Spannung erfolgen.

Der oder die Kurzschließer 5 besitzen Schalteinrichtungen, welche über eine elektronische Auslösung auf der Basis einer Stromquelle ansteuerbar sind.

Die Signalgabe an die Auslöseeinrichtung 6 des betreffenden Kurzschließers 5 erfolgt bevorzugt über eine Lichtwellenleiter-Verbindung oder Funk bzw. sonstige leitungsgebundene Signale auf den Phasen.

Während der Installation kann die Kurzschließereinrichtung durch ein mobiles Detektionssystem mit spezieller Eignung für Arbeiten unter Spannung direkt angesteuert werden.

Bei Bedarf kann auch die Ansteuerung des Leistungsschalters 4 alternativ oder parallel zum festinstallierten System des Lichtbogendetektors 1 erfolgen.

Die Verbindung des installierten Kurzschließers mit der Lichtbogen-detektionseinrichtung 1 erfolgt mit Hilfe eines Adapters 7.

Der Adapter 7 ermöglicht den Anschluss üblicher Signalausgänge bekannter Detektionssysteme. Der Adapter 7 kann mit freien Kanälen der Lichtbogendetektionseinrichtung 1 bzw. auch parallel, z.B. an die Ansteuerung des Leistungsschalters 4 angebunden werden. Der Adapter 7 selbst besitzt darüber hinaus mindestens einen separaten Eingang zum Anschluss des mobilen Detektionssystems 8, welches für Arbeiten unter Spannung geeignet ist.

Bei einem rein optischen Ausgang des Detektionssystems 8 kann der Adapter 7 auch zur Durchleitung bzw. zur Aufteilung des Lichtsignals genutzt werden.

Weiterhin besteht die Möglichkeit, den Adapter 7 über ein Funksignal oder Ähnliches fernzusteuern.

Die Phasen der Niederspannungsanlage sind gemäß den Figuren mit L1, L2 bzw. L3 bezeichnet.

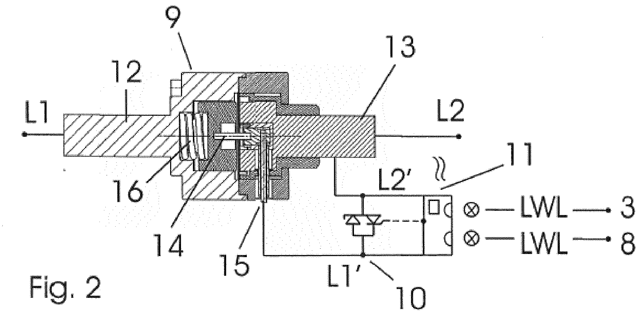

Die Fig. 2 zeigt den beispielhaften Aufbau einer Kurzschließereinrichtung 9 mit Schaltvorrichtung 10 und die elektronische Auslösebaugruppe bzw. elektronische Ansteuerung 11 über ein Lichtwellenleiter-Signal 3 bzw. 8.

Der Kurzschließer 9 besteht aus zwei Hauptelektroden 12 und 13, welche durch ein Opferelement 14 auf Distanz gehalten sind.

Das Opferelement 14 ist elektrisch leitend mit der Hauptelektrode 12 und einer separat ausgeführten Hilfselektrode 15 kontaktiert. Zwischen der Hilfselektrode 15 und der Hauptelektrode 13 befindet sich ein Schaltelement, beispielsweise ausgebildet als Thyristor.

Bei der Ansteuerung der elektronischen Auslösung über ein Lichtwellenleiter-Signal 3 von der Lichtbogen-Detektionseinrichtung 1 (siehe Fig. 1) oder einem Signal vom mobilen Detektor 8 wird der Thyristor 10 angesteuert und verbindet die Hauptelektrode 13 mit der Hilfselektrode 15.

Durch den sich ergebenden Stromfluss über das Opferelement 14 wird dieses zerstört und es bewegt sich die Elektrode 12 unter Einwirkung der Federkraft 16 zur Elektrode 13, wodurch ein metallischer Kurzschluss der Elektroden 12 und 13 entsteht.

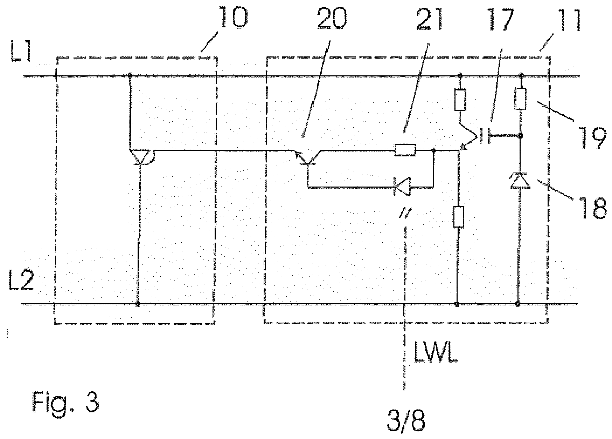

Die Fig. 3 zeigt einen prinzipiellen Aufbau der elektronischen Auslösebaugruppe 11 mit einem Thyristor als Schaltelement 10.

Die Auslösebaugruppe benötigt keinerlei zusätzliche Energieversorgung. Die Schaltfunktion des Thyristors 10 ist bei Anliegen einer Spannung von ca. 20V beispielsweise zwischen den Phasen L1 und L2 und dem Eingang des Lichtwellenleiter-Signals 3 oder 8 nahezu verzugsfrei gegeben.

Die Lichtbogenspannungen in Niederspannungsanlagen erreichen typischerweise Werte > 70V. Die Stromquelle, die bevorzugt auf der Basis eins IGBT 17 realisiert wird, ist durch das Lichtwellenleiter-Signal 3 bzw. 8 kurzzeitig vom hochohmigen in einen niederohmigen Zustand versetzbar.

Hierdurch erfolgt die Ansteuerung des Thyristors 10 und es beginnt der Strom über das Opferelement 14 (siehe Erläuterung zu Fig. 2) zu fließen.

Da es sich bei der vorgestellten Lösung und dem dort angelegten Netz um Wechselspannung handelt, besteht jeweils für die positive sowie für die negative Halbwelle eine phasenrichtige, gleichgerichtete Auslösebaugruppe mit gegenseitiger galvanischer Verbindung des Eingangssignals 3/8 durch einen Optokoppler gemäß Darstellung nach Fig. 3. Ein wesentliches Bauteil der Auslösebaugruppe ist die Regeleinheit, welche für eine konstante Stromversorgung während der Ansteuerung über das Signal 3/8 verantwortlich ist.

Der hierfür verwendete IGBT 17 deckt einen sehr großen Regelbereich ab, um Eingangsspannungen von wenigen 10 V bis weit über den Spitzenwert der Nennspannung zu verarbeiten. Maßgeblich für die Funktionsfähigkeit der Regelung ist eine stabilisierte Referenzspannung am Gate des IGBT 17. Als Referenzspannung dient hier eine Transzorbdiode 18 mit einem relativ hohen Vorwiderstand 19, die durch ihre Kennlinie kennzeichnend ihre Stabilisierungsspannung bereits bei wenigen 100 µA erreicht. Diese Eigenschaft ist notwendig, um bei einer sehr kleinen sowie bei sehr großen Eingangsspannungen gleichermaßen die Referenzspannung zur Verfügung zu stellen und dabei möglichst wenig Verlustleistung zu verbrauchen.

Liegt am Eingang, z.B. zwischen den Phasen L1 und L2, eine Spannung von ca. 20 V an, ist die Stromquelle bereits in ihrem Regelbereich und das Schaltelement 10 (Thyristor) kann bei einem Eingangssignal durch Lichtwellenleiter 3 oder 8 nahezu verzugsfrei angesteuert werden.

Um aus der relativ geringen Energie des Eingangssignals 3/8 einen ausreichend großen Ausgangsstrom mit hoher Steilheit zu erzeugen, was für eine definierte Ansteuerungsgeschwindigkeit des Thyristors 10 notwendig ist, kommt im Schaltpfad ein Transistor 20 mit hohem Stromverstärkungsfaktor zum Einsatz, dessen Emitterstrom durch den Widerstand 21 begrenzt ist. Wird der Thyristor gezündet, fällt die Auslösebaugruppe in den spannungsfreien Zustand, d.h. die dortigen Bauteile werden nur wenige ms belastet.

### Bezugszeichenliste

- 1: Lichtbogen-Detektionseinrichtung
- 2: optische Sensoren
- 3: Störlichtbogen
- 4: Leistungsschalter
- 5: Kurzschließer
- 6: Auslöseeinrichtung des Kurzschließers
- 7: Adapter
- 8: mobiles Detektionssystem
- 9: mechanischer Aufbau des Kurzschließers
- 10: Schaltelement bzw. Thyristor
- 11: elektronische Auslösebaugruppe
- 12, 13: Hauptelektroden
- 14: Opferelement
- 15: Hilfselektrode
- 16: Feder
- 17: IGBT
- 18: Transzorbdiode
- 19: Vorwiderstand
- 20: Transistor
- 21: Widerstand

## Patentansprüche

1. Anordnung zum Anlagen- und Personenschutz in mehrphasigen (L1; L2; L3) Niederspannungs-Energieversorgungsanlagen, umfassend ein Schaltelement, welches von einer optischen Störlichtbogenerkennung auslösbar ist,
**dadurch gekennzeichnet, dass**
die elektrische Energie zum Auslösen des Schaltelements ausschließlich aus der Energie des auftretenden Störlichtbogens resultiert, d.h. aus einer Stromquelle gewonnen wird, welche aus der Spannung des Störlichtbogens versorgt wird, und das Schaltelement als Thyristor (10) ausgebildet ist, welcher eine Einrichtung zum Erzeugen eines Kurzschlusses mittels einer Kurzschließereinrichtung (9) aktiviert, weiterhin eine elektronische Auslösebaugruppe (11) vorgesehen ist, welche einen Bipolartransistor mit isolierter Gate-Elektrode (IGBT 17) als geregelte Stromquelle enthält, dessen Kollektor und Emitter zwischen zwei Phasen (L1; L2) geschaltet ist, an dessen Gate eine stabilisierte Referenzspannung anliegt und welcher mit einem Schalttransistor (20) in Verbindung steht, welcher bei Auftreten eines Störlichtbogens leitfähig wird und über seinen Ausgang den Thyristor (10) betätigt.

2. Anordnung nach Anspruch 1,
**dadurch gekennzeichnet, dass**
ein Adapter (7) vorgesehen ist, welcher Signale bekannter Lichtbogendetektoren in ein optisches Signal umwandelt und dieses über eine Lichtwellenleiter-Verbindung der elektronischen Auslösebaugruppe (11) zuleitet, wobei durch ein Lichtwellenleiter-Signal (3; 8) der Bipolartransistor (IGBT 17) kurzzeitig von einem hochohmigen in einen niederohmigen Zustand versetzbar ist.

3. Anordnung nach Anspruch 2,
**dadurch gekennzeichnet, dass**
der Adapter (7) einen Fernauslöseeingang oder Fernauslöseanschluss aufweist.

4. Anordnung nach einem der Ansprüche 2 oder 3,
**dadurch gekennzeichnet, dass**
die elektronische Auslösebaugruppe (11) durch UND-Verknüpfung des Lichtwellenleiter-Signals (3; 8) und einer Störlichtbogenspannung von größer 20 V niederohmig geschalten wird und den Thyristor (10) betätigt.

5. Anordnung nach Anspruch 4,
**dadurch gekennzeichnet, dass**
die elektronische Auslösebaugruppe (11) eine Fotodiode, einen Fototransistor oder einen Fotowiderstand aufweist, mit dessen Hilfe der Schalttransistor (20) in einen leitenden Zustand versetzbar ist.

## Claims

1. An arrangement for protecting systems and individuals in multiphase (L1; L2; L3) low-voltage power supply systems, comprising a switching element which can be triggered by the optical detection of a fault arc,
**characterized in that** the electric energy for triggering the switching element results exclusively from the energy of the occurring fault arc, i.e. from a current source which is supplied from the voltage of the fault arc, and the switching element is formed as a thyristor (10) which activates a device for generating a short circuit by means of a short-circuiter device (9), and further an electronic trigger assembly (11) is provided which contains a bipolar transistor with insulated gate electrode (IGBT 17) as controlled current source, whose collector and emitter is switched between two phases (L1; L2), to the gate of which a stabilised reference voltage is applied, and which is in connection with a switching transistor (20) which becomes conductive upon occurrence of a fault arc and actuates the thyristor (10) via its output.

2. An arrangement according to claim 1, **characterized in that** an adapter (7) is provided which converts signals of known arc detectors into an optical signal and supplies said signal via an optical waveguide connection to the electronic trigger assembly (11), wherein the bipolar transistor (IGBT 17) can be moved briefly from a high-resistance state to a low-resistance state by an optical waveguide signal (3; 8).

3. An arrangement according to claim 2, **characterized in that** the adapter (7) comprises a remote triggering input or a remote triggering connection.

4. An arrangement according to one of the claims 2 or 3, **characterized in that** the electronic trigger assembly (11) is switched to low-resistance by an AND operation of the optical waveguide signal (3; 8) and a fault arc voltage of greater than 20 V and actuates the thyristor (10).

5. An arrangement according to claim 4, **characterized in that** the electronic triggering assembly (11) comprises a photodiode, a phototransistor or a photoresistor, by means of which the switching transistor (20) can be moved to a conductive state.

## Revendications

1. Ensemble pour la protection d'installations et de personnes dans des installations d'alimentation électrique à plusieurs phases (L1 ; L2 ; L3) à basse tension, incluant un élément de commutation qui est déclenchable par un dispositif optique de reconnaissance d'un arc électrique parasite, **caractérisé en ce que**
l'énergie électrique pour déclencher l'élément de commutation résulte exclusivement de l'énergie de l'arc électrique parasite apparu, c'est-à-dire qu'elle est récupérée d'une source électrique qui est alimentée à partir de la tension de l'arc électrique parasite, et l'élément de commutation est réalisé sous forme de thyristor (10), qui active un moyen pour engendrer un court-circuit au moyen d'un dispositif à court-circuit (9), il est en outre prévu un groupe structurel électronique de déclenchement (11), qui contient un transistor bipolaire avec une électrode de grille isolée (IGBT 17) à titre de source de courant régulée, dont le collecteur et l'émetteur sont branchés entre deux phases (L1 ; L2) avec une tension de référence stabilisée appliquée à la grille de celui-ci, et le transistor bipolaire est connecté à un transistor de commutation (20) qui devient conducteur lors de l'apparition d'un arc électrique parasite, et qui actionne le thyristor (10) via sa sortie.

2. Ensemble selon la revendication 1,
**caractérisé en ce qu'**il est prévu un adaptateur (7), qui convertit les signaux de détecteurs d'arc électrique connus en un signal optique et qui amène celui-ci au groupe structurel électronique de déclenchement (11) via une liaison à guide d'onde lumineuse, et au moyen d'un signal de guide d'onde lumineuse (3 ; 8) le transistor bipolaire (IGBT 17) peut être brièvement transféré d'un état à forte résistance jusque dans un état à faible résistance.

3. Ensemble selon la revendication 2,
**caractérisé en ce que** l'adaptateur (7) comprend une entrée de télécommande ou une connexion de télécommande.

4. Ensemble selon l'une des revendications 2 ou 3,
**caractérisé en ce que** le groupe structurel électronique de déclenchement (11) est transféré dans un état à faible résistance, par un chaînage de type ET du signal (3 ; 8) du guide d'onde lumineuse et d'une tension d'arc électrique parasite supérieure à 20 V, et actionne le thyristor (10).

5. Agencement selon la revendication 4,
**caractérisé en ce que** le groupe structurel électronique de déclenchement (11) comprend une photodiode, un phototransistor ou une photorésistance, à l'aide duquel/de laquelle le transistor de commutation (20) peut être transféré dans un état conducteur.
